# EUROPEAN PATENT APPLICATION

(11) **EP 2 911 059 A1**
(43) Date of publication of application: **26.08.2015**
(21) Application number: 15153198.5
(22) Date of filing: 30.01.2015
(51) Int. Cl.: G06F 11/22, G06F 11/30

(54) **Operation verification device for virtual apparatus, and operation verification system and program for virtual apparatus**

(30) Priority: 24.02.2014 JP 2014032834
(71) Applicant: Fujitsu Limited, Kawasaki-shi, Kanagawa 211-8588 (JP)
(72) Inventor: Nakazono, Koji, Kanagawa, 211-8588 (JP)
(74) Representative: Hoffmann Eitle

(57) **Abstract**

An operation verification device for a virtual apparatus which confirms a state of operation of the virtual apparatus, comprising a configuration information transmission unit which transmits configuration information on the virtual apparatus to an operation confirmation device that performs a communication for confirming the state of operation of a virtual apparatus an operation confirmation instruction unit which instructs the operation confirmation device to perform a communication for confirming the state of operation on a basis of the configuration information while a connection with the operation confirmation device is disconnected, and after issuing the instruction, disconnects the connection with the operation confirmation device and a confirmation result collection unit which restarts a connection with the operation confirmation device while the connection between the operation confirmation device and the virtual apparatus is disconnected, and receives a result of the confirmation of the state of operation.

## Description

### FIELD

The present invention relates to an operation verification device for a virtual apparatus, and an operation verification system and program for a virtual apparatus.

### BACKGROUND

A cloud computing service virtualizes a hardware group, such as a plurality of servers in a server facility, on the basis of a service agreement with a cloud user, and provides infrastructure, such as the virtual machines, to the cloud user as a network-routed service. With a cloud computing service of this kind, virtualization software (a hypervisor) allocates a physical machine to a plurality of virtual machines, thus making it possible to provide services based on application programs installed on the virtual machines.

When a cloud user has created a virtual machine (also called a "virtual apparatus") by virtualization software, the virtualization software automatically sets a host name and IP address, and the like. Therefore, the virtualization software provides a function which enables the cloud user to use a virtual machine immediately after the virtual machine has been created.

Here, there may be cases where a cloud user is not able to use a virtual machine, for a reason such as the fact that the OS is not running normally, or the like, even though the virtual machine appears to have been created normally. Therefore, a system administrator, for instance, carries out tests relating to the start-up of the OS in the virtual machine, and the like, when a virtual machine has been created (see, for example, Japanese Laid-open Patent Publication No. 2011-192098 and Japanese Laid-open Patent Publication No. H8-305596).

### SUMMARY

A system administrator who is testing the virtual machine, for example, previously installs an agent for confirming the start-up of the OS, and the like, in the virtual machine, and carries out a test of the virtual machine by using this agent. However, the agent needs to run on the virtual machine that is the object of the test. Therefore, the system administrator has to prepare one agent for each of the virtual machines, and install these agents in the respective virtual machines. Moreover, the system administrator is not able to carry out the test described above in respect of a virtual machine which is using an OS that is not compatible with the agent.

Furthermore, the system administrator carries out a ping communication, or the like, to the virtual machine from a management server which manages the virtual machines (also called "operation verification device"), for example, and performs a test of the virtual machine by confirming start-up of the OS, etc., on the virtual machine. However, when direct communication is permitted between the management server and a virtual machine which is being used by a cloud user, then there could be a risk of illegitimate access to the management server by a malicious cloud user, for instance, and therefore the security risk is increased.

Therefore, the object of one embodiment is to provide an operation verification device for a virtual apparatus, and an operation verification system and program for a virtual apparatus, whereby it is possible to carry out testing of a virtual apparatus while guaranteeing security of the operation verification device.

According to an aspect of the embodiments, an operation verification device for a virtual apparatus which confirms a state of operation of the virtual apparatus, an operation verification device for a virtual apparatus has a configuration information transmission unit which transmits configuration information on the virtual apparatus to an operation confirmation device that performs with the virtual apparatus a communication for confirming the state of operation of the virtual apparatus, an operation confirmation instruction unit which instructs the operation confirmation device to perform the communication for confirming the state of operation on the basis of the configuration information while a connection with the operation confirmation device is disconnected, and after instructing, disconnects the connection with the operation confirmation device, and a confirmation result collection unit which restarts the connection with the operation confirmation device and receives a result of the confirmation of the state of operation from the operation confirmation device, while a connection between the operation confirmation device and the virtual apparatus is disconnected.

It is possible to test a virtual apparatus while guaranteeing the security of the operation verification device.

### BRIEF DESCRIPTION OF DRAWINGS

FIG. 1 is a diagram illustrating the overall configuration of a cloud system according to the present embodiment.
FIG. 2 is a diagram illustrating the hardware configuration of the management server and the VM host.
FIG. 3 is a functional block diagram of the management server illustrated in FIG. 2.
FIG. 4 is a functional block diagram of the VM host illustrated in FIG. 2.
FIG. 5 is a diagram illustrating a general operation verification process for a virtual machine.
FIG. 6 is a sequence chart diagram illustrating an overview of an operation verification process for a virtual machine.
FIG. 7 is a diagram illustrating an overview of an operation verification process for a virtual machine.
FIG. 8 is a diagram illustrating an overview of an operation verification process for a virtual machine.
FIGS. 9A and 9B are a diagram illustrating one example of a network information table and a system network information table.
FIG. 10 is a diagram illustrating one example of virtual machine information table.
FIG. 11 is a diagram illustrating one example of configuration information.
FIGS. 12A and 12B are a diagram illustrating the information held by the monitoring server.
FIG. 13 is a flowchart illustrating the details of the operation verification process for a virtual machine.
FIG. 14 is a flowchart illustrating the details of the operation verification process for a virtual machine.
FIG. 15 is a flowchart illustrating the details of the operation verification process for a virtual machine.
FIG. 16 is a diagram illustrating the switching of connection destination of the monitoring server.
FIG. 17 is a diagram illustrating the switching of connection destination of the monitoring server.
FIG. 18 is a diagram illustrating the switching of connection destination of the monitoring server.
FIG. 19 is a flowchart illustrating an operation verification process for a virtual machine according to a second embodiment.
FIG. 20 is a flowchart illustrating an operation verification process for a virtual machine according to a second embodiment.
FIG. 21 is a flowchart illustrating an operation verification process for a virtual machine according to a second embodiment.
FIG. 22 is a diagram illustrating an operation verification process for virtual machines according to the second embodiment.
FIG. 23 is a diagram illustrating an operation verification process for virtual machines according to the second embodiment.

### DESCRIPTION OF EMBODIMENTS

### (Configuration of cloud system)

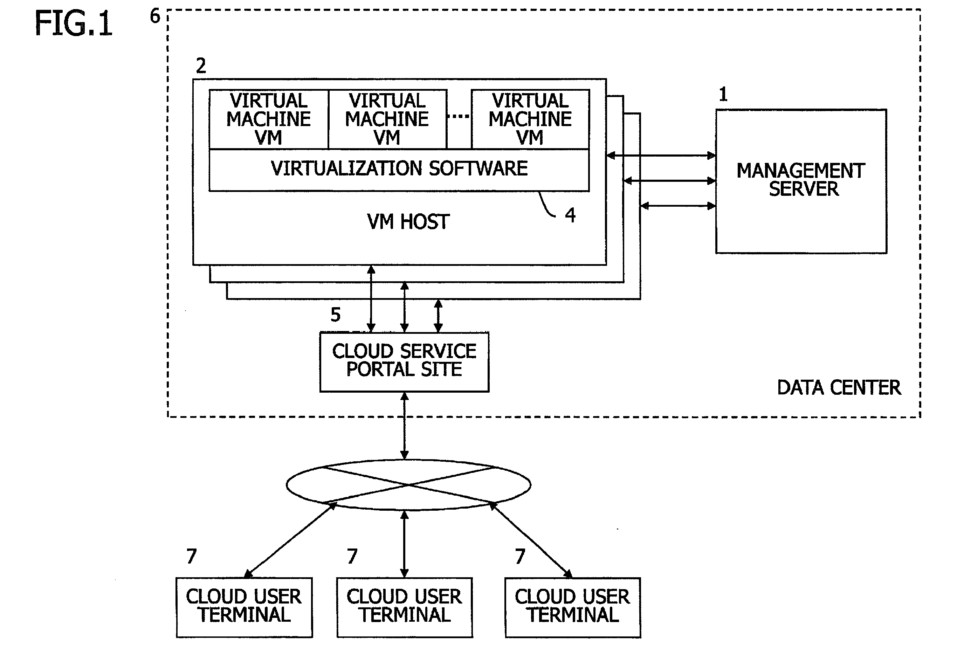

FIG. 1 is a diagram illustrating the overall configuration of a cloud system according to the present embodiment. A management server 1, a VM host 2 and a cloud computing service portal site 5 are provided inside a server facility 6. A cloud user terminal 7 may be connected to the server facility 6 via a network, such as the Internet or Intranet.

The VM host 2 is constituted by a plurality of virtual machines in the example in FIG. 1, and the physical machines each have a CPU, a memory (DRAM), a large-capacity memory, such as a hard disk (HDD), and a network. The resources of the VM host 2 are allocated to a plurality of virtual machines (virtual apparatuses) VM. The management server 1 and the cloud computing service portal site 5 may be constructed from these virtual machines VM, for example. Furthermore, as described in detail below, a portion of the virtual machines VM function as a monitoring server (also called "operation configuration device") which carries out communications in order to confirm the state of operation of the virtual machine VM that is the object of verification.

The cloud computing service which is provided to a cloud user by the cloud system is a service which provides, via a network, a basis for building and operating a computer system, in other words, the virtual machines and actual infrastructure, such as a network.

The cloud user accesses the cloud computing service portal site 5 from the cloud user terminal 7, selects the specifications needed for the virtual machine, such as the clock frequency of the CPU, the capacity of the memory (GB), the capacity of the hard disk (MB/sec, IOPS), and the network bandwidth (Gbps), and concludes a cloud use agreement in respect of these specifications. The cloud user terminal 7 accesses the cloud computing service portal site 5 and monitors the operational circumstances of the virtual machine and controls the operation of the virtual machine.

The management server 1 manages the physical machines, and the like, of the VM host 2, in collaboration with virtualization software (hypervisor) 4, to allocate hardware to virtual machines VM and thereby construct and manage virtual machines VM.

The virtualization software 4 is basic software which operates the virtual machines by allocating the CPU, memory, hard disk and network of the physical machines of the VM host 2, in accordance with instructions from the management server 1. The virtualization software 4 runs on a server inside the VM host 2, for example.

In addition to receiving the allocation of the hardware described above, the virtual machine VM holds, on the hard disk thereof, an image file including the OS, middleware, applications, database, and the like, and the image file is written from the hard disk to the memory at start-up, for instance, and operations corresponding to the desired service are carried out.

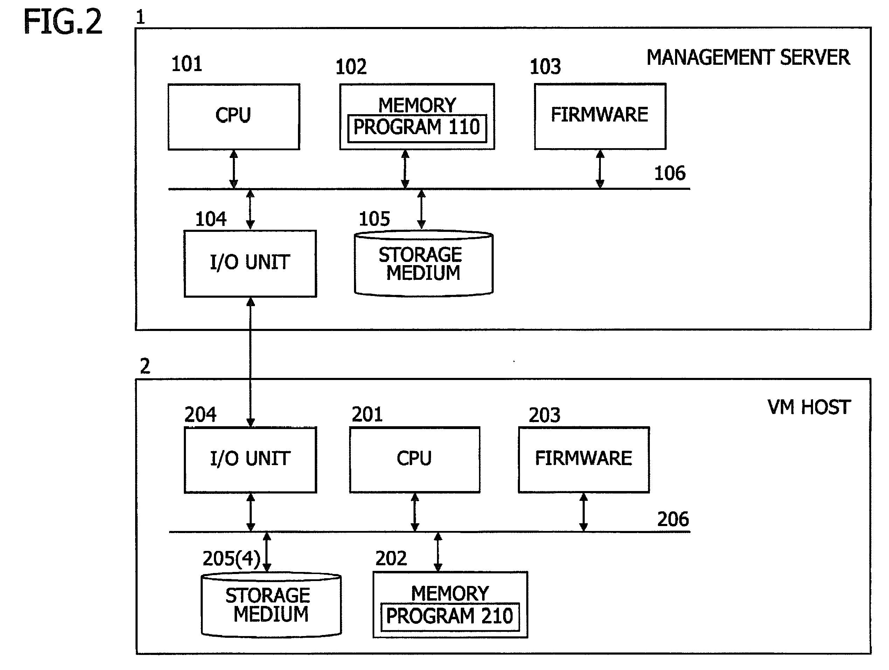

FIG. 2 is a diagram illustrating the hardware configuration of the management server and the VM host. The management server 1 includes: a CPU (processor) 101, a memory 102, a firmware 103, an external interface (I/O unit) 104, and a storage medium 105. These units are connected to each other via a bus 106. The storage medium 105 stores a program 110 for carrying out an operation verification process of a virtual machine. When executing the program 110, the CPU 101 loads the program 110 to the memory 102 from the storage medium 105, and carries out an operation verification process of the virtual machine in collaboration with the program 110.

The VM host 2 includes a CPU (processor) 201, a memory 202, a firmware 203, an external interface (I/O unit) 204, and a storage medium 205. These units are connected to each other via a bus 206. The storage medium 205 stores a program 210 for carrying out an operation verification process of a virtual machine. When executing the program 210, the CPU 201 loads the program 210 to the memory 202 from the storage medium 205, and carries out an operation verification process of the virtual machine in collaboration with the program 210. The operation verification process for a virtual machine is described below.

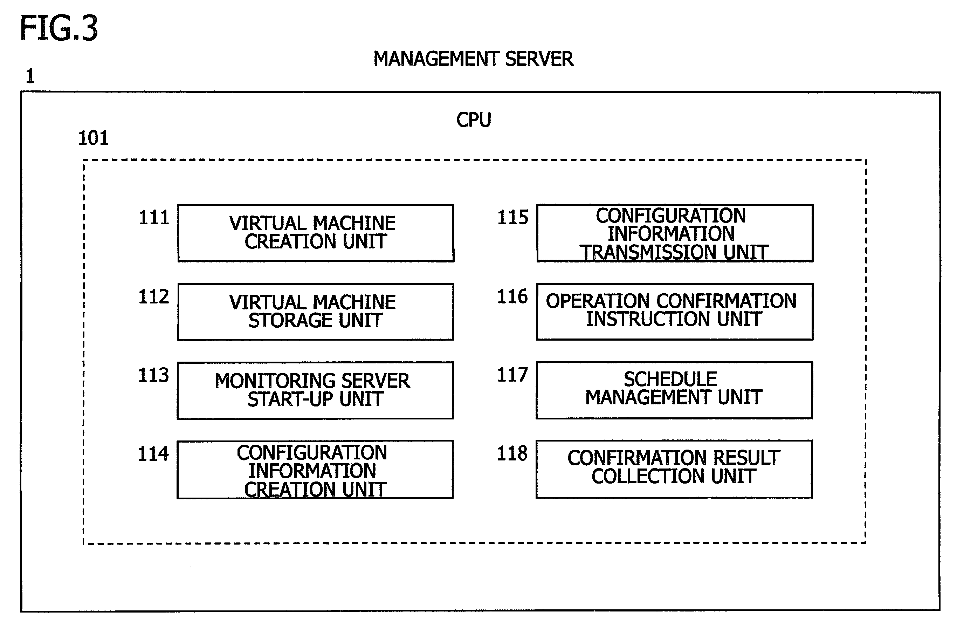

FIG. 3 is a functional block diagram of the management server illustrated in FIG. 2. As illustrated in FIG. 3, the CPU 101, by working in collaboration with the program 110, operates, for example, as a virtual machine creation unit 111, a virtual machine storage unit 112, a monitoring server start-up unit 113, a configuration information creation unit 114, a configuration information transmission unit 115, an operation confirmation instruction unit 116, a schedule management unit 117, and a confirmation result collection unit 118.

The virtual machine creation unit 111 constructs a virtual machine that is to be provided to a cloud user, in collaboration with the virtualization software 4. Furthermore, the virtual machine creation unit 111 constructs a monitoring server (virtual machine) for performing communications to confirm the state of operation of the virtual machine that is the object of verification. This configuration of the state of operation corresponds to a start-up confirmation of a virtual machine by a ping operation, or the like, for example. The virtual machine storage unit 112 stores information about the virtual machines, of which the state of operation needs to be confirmed. The information about the virtual machines is, for example, a network ID of the network (virtual network) where the virtual machines are located, and the server IDs of the virtual machines. The monitoring server start-up unit 113 starts up the monitoring server when the state of operation of a virtual machine is to be confirmed. The configuration information creation unit 114 creates configuration information which is needed in order for the monitoring server to check the operation of the virtual machines, on the basis of the information about the virtual machines stored in the virtual machine storage unit 112. The configuration information transmission unit 115 sends the configuration information created by the configuration information creation unit 114, to the monitoring server.

Furthermore, the operation confirmation instruction unit 116 issues an instruction to the monitoring server to perform a communication for confirming the state of operation of the virtual machine that is the object of verification, on the basis of the configuration information. Moreover, the operation confirmation instruction unit 116 issues an instruction to perform a communication for confirming the state of operation of the virtual machine that is the object of verification, while the connection between the management server 1 and the monitoring server is disconnected. After issuing the abovementioned instruction to the monitoring server, the operation confirmation instruction unit 116 then disconnects the connection between the management server 1 and the monitoring server. The schedule management unit 117 manages the times at which the respective processes are executed. The schedule management unit 117, more specifically, manages the time at which the monitoring server is caused to perform a communication for confirming the state of operation of the virtual machine (also called the "first time") and the time at which connection between the management server 1 and the monitoring server is restarted (also called the "second time"). The confirmation result collection unit 118 restarts the connection between the management server 1 and the monitoring server, while the connection between the monitoring server and the virtual machine is disconnected, and receives a confirmation result of the state of operation in the virtual machine that is the object of verification.

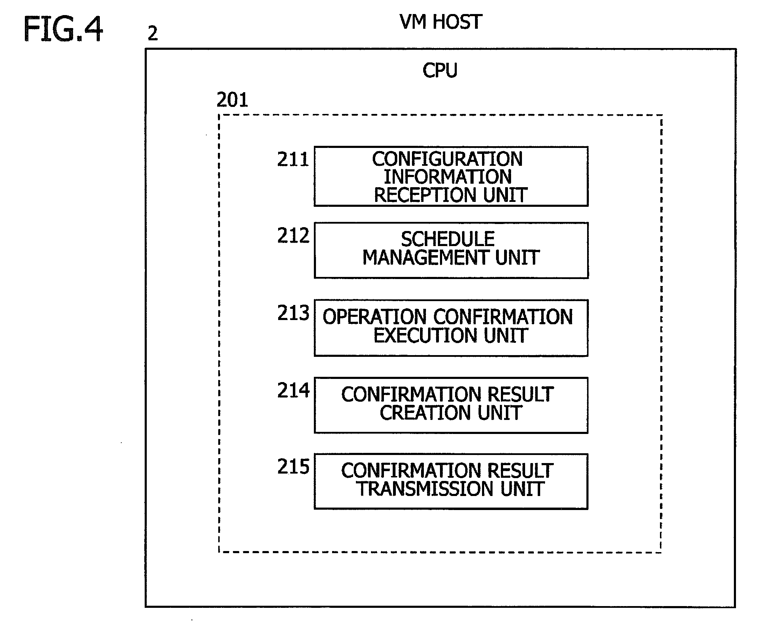

FIG. 4 is a functional block diagram of the VM host illustrated in FIG. 2. As illustrated in FIG. 4, the CPU 201, by working in collaboration with the program 210, functions as a configuration information reception unit 211, an operation confirmation execution unit 213, a confirmation result creation unit 214 and a confirmation result transmission unit 215, for example.

The configuration information reception unit 211 receives configuration information transmitted from the management server 1. A schedule management unit 212 manages the time at which the respective processes are executed. The schedule management unit 212, more specifically, manages the time in such a manner that the operation confirmation execution unit 213 performs a communication for confirming the state of operation of the virtual machine, on the basis of the first time which is received from the management server 1. While the connection between the management server 1 and the monitoring server is disconnected, the operation confirmation execution unit 213 connects with the virtual machine that is the object of verification and performs a communication for confirming the state of operation of the virtual machine on the basis of the configuration information. The operation confirmation execution unit 213 then confirms the state of operation of the virtual machine that is the object of verification, and then disconnects the connection with the virtual machine that is the object of verification.

Furthermore, the confirmation result creation unit 214 creates a confirmation results for transmission to the management server 1, on the basis of the result of the state of operation of the virtual machine which is produced by the operation confirmation execution unit 213. The confirmation result transmission unit 215 sends the confirmation result created by the confirmation result creation unit 214, to the management server 1.

### (General operation verification process for virtual machine)

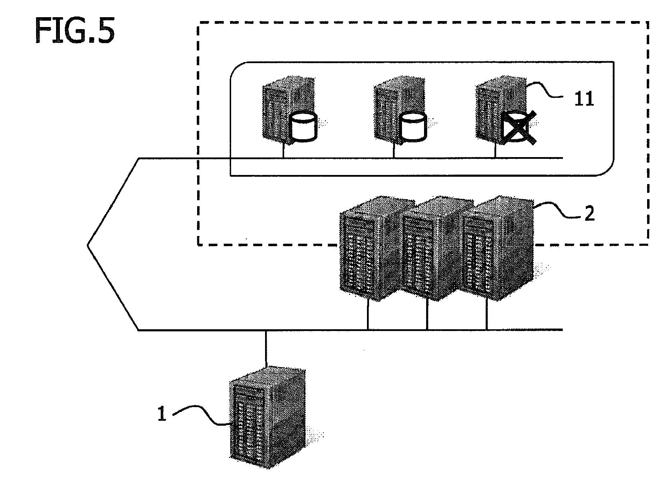

Next, an operation verification process for a virtual machine which is performed by the management server 1 will be described. FIG. 5 is a diagram illustrating a general operation verification process for a virtual machine. In FIG. 5, the VM host 2 constructs a plurality of virtual machines 11 for providing cloud computing services to a cloud user. The portion marked by the dotted lines in FIG. 5 represents a virtual region (cloud environment) generated by the VM host 2.

As illustrated in FIG. 5, in order to perform the operation verification process for a virtual machine by the management server 1, for example, an agent for confirming start-up of the OS, etc., is installed previously in the virtual machine. However, it is not possible to carry out the test in respect of a virtual machine using an OS that is not compatible with the agent. Furthermore, the system administrator needs to prepare one agent for each virtual machine, and install the agents in the respective virtual machines.

Moreover, as illustrated in FIG. 5, in order to perform the operation verification process for a virtual machine by the management server 1, the management server 1 and the virtual machine 11 may be connected directly, and the virtual machine tested by confirming start-up of the OS in the virtual machine, or the like. However, when direct communication is permitted between the management server and a virtual machine that is being used by the cloud user, then there is a risk of a malicious cloud user making illegitimate access to the management server via the cloud user terminal 7, for instance. Therefore, the security risk becomes greater, which is not desirable.

Consequently, in the present embodiment, the state of operation of the virtual machine 11 is confirmed in a state where the security of the management server 1 is guaranteed by confirming the state of operation of the virtual machine 11 by the monitoring server while the connection between the management server 1 and the monitoring server is disconnected.

### (First Embodiment)

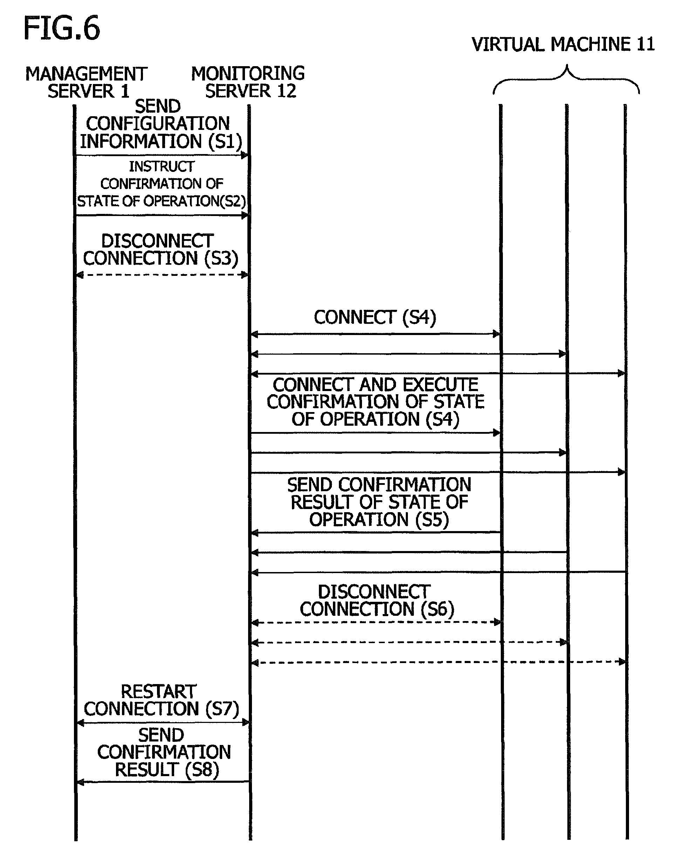

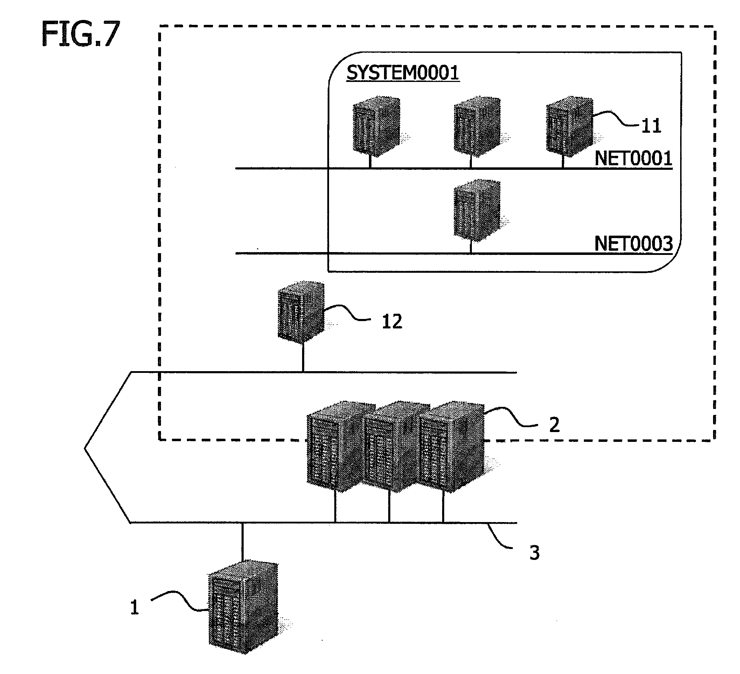

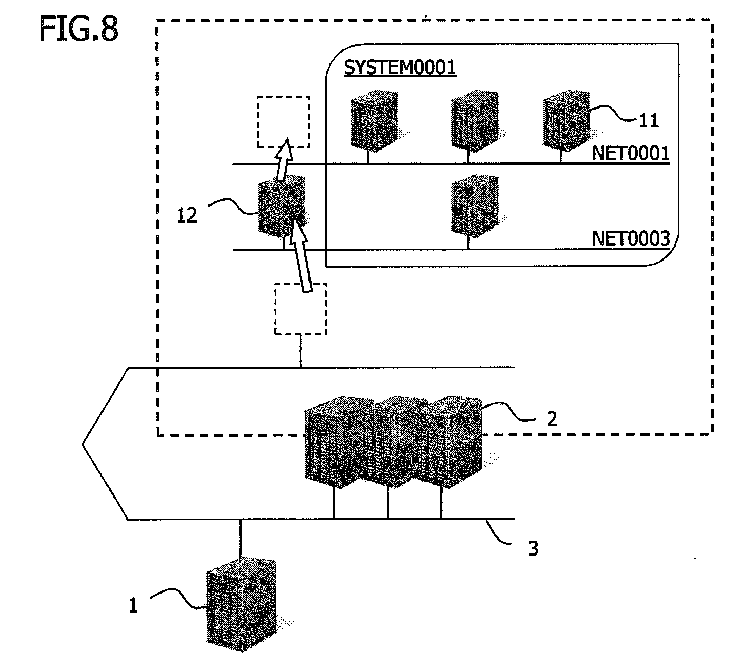

To start with, a first embodiment of the invention will be described. FIG. 6 is a sequence chart diagram illustrating an overview of an operation verification process for a virtual machine. Furthermore, FIG. 7 and FIG. 8 are diagrams illustrating an overview of an operation verification process for a virtual machine. The overview of the operation verification process for a virtual machine illustrated in FIG. 6 is described with reference to FIG. 7 and FIG. 8.

### (S1 in FIG. 6)

Firstly, the management server 1 sends the configuration information of the virtual machine 11 to the monitoring server 12 (S1). As illustrated in FIG. 7, the management server 1 is connected to the management LAN 3. The management LAN 3 is not connected to the LAN (network) to which the virtual machines 11 are connected. Moreover, in the example illustrated in FIG. 7, the monitoring server 12 is connected to the management LAN 3. Consequently, in the state in FIG. 7, the management server 1 is able to communicate with the monitoring server 12, but is not able to communicate with the virtual machine 11. The networks to which the virtual machine 11 is connected (also called "virtual networks"; "NET0001" and "NET0003" in the example in FIG. 7) are not able to communicate with each other. The configuration information transmitted from the management server 1 to the monitoring server 12 is described below.

### (Configuration information)

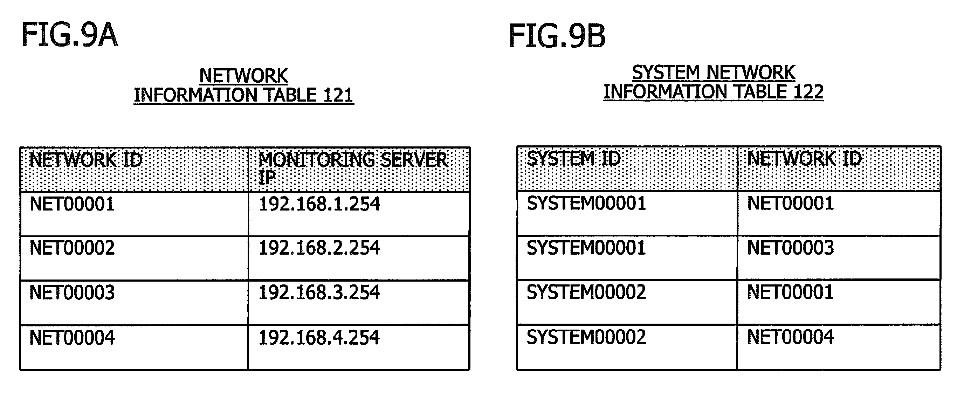

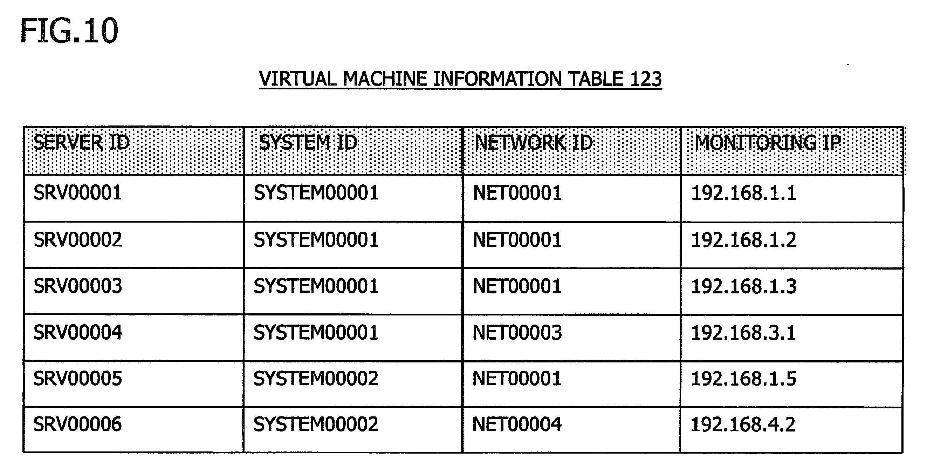

FIGS. 9A and 9B are a diagram illustrating one example of a network information table and a system network information table. Furthermore, FIG. 10 is a diagram illustrating one example of virtual machine information table. The management server 1 has, as information that enables the monitoring server 12 to confirm the state of operation of the virtual machine 11, a network information table 121, a system network information table 122 and a virtual machine information table 123. Firstly, the respective tables of the management server 1 will be described.

The network information table 121 is a table which manages information about the networks managed by the management server 1 (the networks where the virtual machines 11 managed by the management server 1 are located). In the example in FIG. 9A, the management server 1 manages four networks having network IDs from NET0001 to NET0004 (simply called NET0001 to NET0004 below). Furthermore, the network information table 121 has an IP address for the monitoring server (also called IP address for operation confirmation device) which is used when the monitoring server 12 is connected to the networks. Consequently, it is possible to prevent a situation where the IP for the monitoring server has expired, when the monitoring server 12 is connected to the networks.

The system network information table 122 is a table which manages the information about the systems that are managed by the management server 1, for example. In the example in FIG. 9B, the management server 1 manages two systems having system IDs of SYSTEM0001, SYSTEM0002 (simply called "SYSTEM0001" and "SYSTEM0002" below). Furthermore, in the example in FIG. 9B, SYSTEM0001 uses virtual machines 11 on NET0001 and NET0003, and SYSTEM0002 uses virtual machines 11 on NET0002 and NET0004. The systems in FIGS. 9A and 9B are virtual systems constituted by virtual machines 11, for example, cloud systems which are provided to a cloud user.

The virtual machine information table 123 is a table which manages information about the virtual machines managed by the management server. In the example in FIG. 10, the management server 1 manages six virtual machines 11 having server IDs from SRV0001 to SRV0006 (simply called "SRV0001" to "SRV0006" below). Furthermore, in the example in FIG. 10, the server IDs of the virtual machines 11 are stored in associated fashion with the network ID of the network where the virtual machines 11 are located and the system ID of the system which uses the virtual machines 11. Moreover, the server IDs are stored in association with the IP address (monitoring IP) of the connection destination to which a communication is performed, when the monitoring server 12 confirms the state of operation of the virtual machines 11.

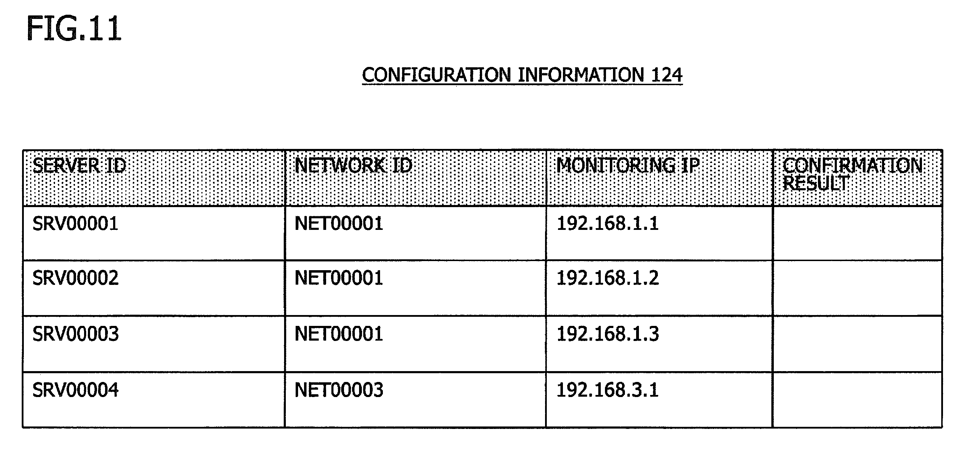

FIG. 11 is a diagram illustrating one example of configuration information. In the example in FIG. 11, the management server 1 creates configuration information 124 on the basis of the server ID, network ID and monitoring IP in the virtual machine information table 123 illustrated in FIG. 10 (S1). The monitoring server 12 confirms the state of operation of the virtual machine 11 on the basis of the configuration information 124 received from the management server 1. The example in FIG. 11 is an example of configuration information 124 in a case where the management server 1 causes confirmation of the state of operation from SRV0001 to SRV0004 (the virtual machines 11 used by the SYSTEM0001 in FIG. 9B) to be performed by the monitoring server 12 (one monitoring server). The management server 1 sends the configuration information 124 with the confirmation result column in a blank state, to the monitoring server 12. Furthermore, the management server 1 may also create configuration information 124 in a format that includes the monitoring server IP which is included in the network information table 121, for instance.

### (S2 and S3 in FIG. 6)

Returning to FIG. 6, the management server 1 instructs the monitoring server 12 to confirm the state of operation (S2). More specifically, the management server 1 instructs the monitoring server 12 to confirm the state of operation of the virtual machine 11, on the basis of the contents of the configuration information sent in S1. Thereupon, the management server 1 disconnects the connection with the monitoring server 12 (S3). In the example in FIG. 7, the monitoring server 12 disconnects the connection with the management LAN 3 to which the management server 1 is connected. Consequently, as illustrated in FIG. 8, the management server 1 and the virtual machine 11 are not connected even when the monitoring server 12 and the virtual machine 11 are connected. Therefore, it is possible to prevent a malicious cloud user from making illegitimate access to the management server via the cloud user terminal 7.

### (S4 in FIG. 6)

Next, the monitoring server 12 connects with the virtual machine that is the object of verification and performs a communication in order to confirm the state of operation, on the basis of the configuration information of the virtual machine 11 received from the management server 1 (S4). The examples in FIG. 7 and FIG. 8 are examples of a case where the management server 1 confirms, by using the monitoring server 12, the state of operation of the virtual machines 11 used by SYSTEM0001 illustrated in FIG. 9A, 9B and FIG. 10. In other words, the monitoring server 12 confirms the state of operation of the virtual machines 11 located on NET0001 and NET0003. As illustrated in FIG. 8 and FIG. 10, three virtual machines 11 (SRV0001 to SRV0003) are connected to NET0001, and one virtual machine 11 (SRV0004) is connected to NET0003.

The monitoring server 12 disconnects the connection with the management server 1 (S3), and thereupon, as illustrated in FIG. 8, connects with NET0003. The monitoring server 12 then confirms the state of operation of the virtual machine 11 (one machine) on NET0003. Subsequently, the monitoring server 12 disconnects the connection with NET0003 and connects with NET0001. The monitoring server 12 then confirms the state of operation of the virtual machines 11 (three machines) on NET0001.

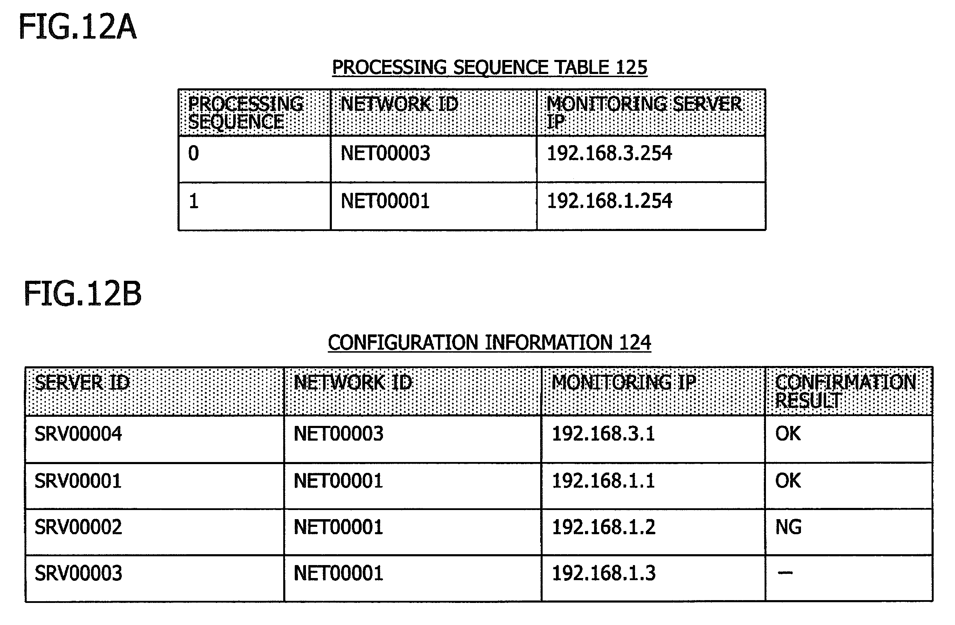

FIGS. 12A and 12B is a diagram illustrating the information held by the monitoring server. As illustrated in FIG. 12A, the monitoring server 12 has a processing sequence table 125 which stores information in the sequence of the networks of which the state of operation is confirmed by the monitoring server 12. In the example in FIG. 12A, the processing sequence of NET0003 is "0" and the processing sequence of NET0001 is "1". Therefore, as illustrated in FIG. 8, the monitoring server 12 firstly confirms the state of operation of the virtual machine 11 on NET 0003, and then confirms the state of operation of the virtual machines 11 on NET0001. Furthermore, in the example in FIG. 12A, the monitoring server 12 has information about the monitoring server IP which is used when connecting to the respective networks. The monitoring server 12 uses this monitoring server IP to connect to the networks. Furthermore, the processing sequence table 125 is created by the management server 1 in the present embodiment, and the monitoring server 12 receives the processing sequence table 125 from the management server 1. Therefore, the management server 1 has the same processing sequence table 125 as that held by the monitoring server 12. The monitoring server IP in the processing sequence table 125 is the same as the monitoring server IP stored in the network information table 121 illustrated in FIG. 9A.

Furthermore, as illustrated in FIG. 12B, the monitoring server 12 inputs the confirmation result of the state of operation of the virtual machine 11, to the confirmation result column of the configuration information received from the management server 1 in S1. The configuration information 124 illustrated in FIG. 12B indicates a case where the state of operation of SRV0004 on NET0003 and SRV0001 on NET0001 has been confirmed as normal ("OK" in FIG. 12B), but the state of operation of SRV0002 on NET0001 could not be confirmed as normal ("NG" in FIG. 12B). Furthermore, the configuration information 124 illustrated in FIG. 12B indicates a case where confirmation of the state of operation of SRV0003 on NET0003 has not been completed ("-" in FIG. 12B).

### (S5, S6, S7, S8 in FIG. 6)

Returning to FIG. 6, after receiving the results of confirmation of the state of operation from all of the virtual machines 11 which are the object of verification (S5), the monitoring server 12 disconnects the connection with all of the virtual machines 11 which are the object of verification (S6). The connection between the management server 1 and the monitoring server 12 is then restarted (S7), and the management server 1 receives the confirmation results of the state of operation (the configuration information 124 illustrated in FIG. 12B with the confirmation results of the state of operation input into the confirmation results column) from the monitoring server 12 (S8).

In this way, according to the present embodiment, the management server 1 firstly sends configuration information for confirming the state of operation of the virtual machines 11 to the monitoring server 12. Thereupon, the management server 1 issues an instruction to the monitoring server 12, to confirm the state of operation of the virtual machines 11, while the connection between the management server 1 and the monitoring server 12 is disconnected, on the basis of the transmitted configuration information. After issuing this instruction, the management server 1 disconnects the connection between the management server 1 and the monitoring server 12. Moreover, when confirmation of the state of operation of the virtual machines 11 by the monitoring server 12 has been completed, and the connection between the monitoring server 12 and the virtual machines 11 has been disconnected, then the connection between the management server 1 and the monitoring server 12 is restarted. The management server 1 then receives the results of confirmation of the state of operation of the virtual machines 11, from the monitoring server 12. Consequently, the management server 1 is able to receive the results of confirmation of the state of operation of the virtual machines 11, without the management server 1 and the virtual machines 11 being in a state that enables direct communication therebetween. Therefore, it is possible to confirm the state of operation of the virtual machines in a state of guaranteed security of the management server 1. Furthermore, it is possible to confirm the state of operation of the virtual machines, without installing an agent for confirming the state of operation, in each of the virtual machines 11.

### (Details of first embodiment)

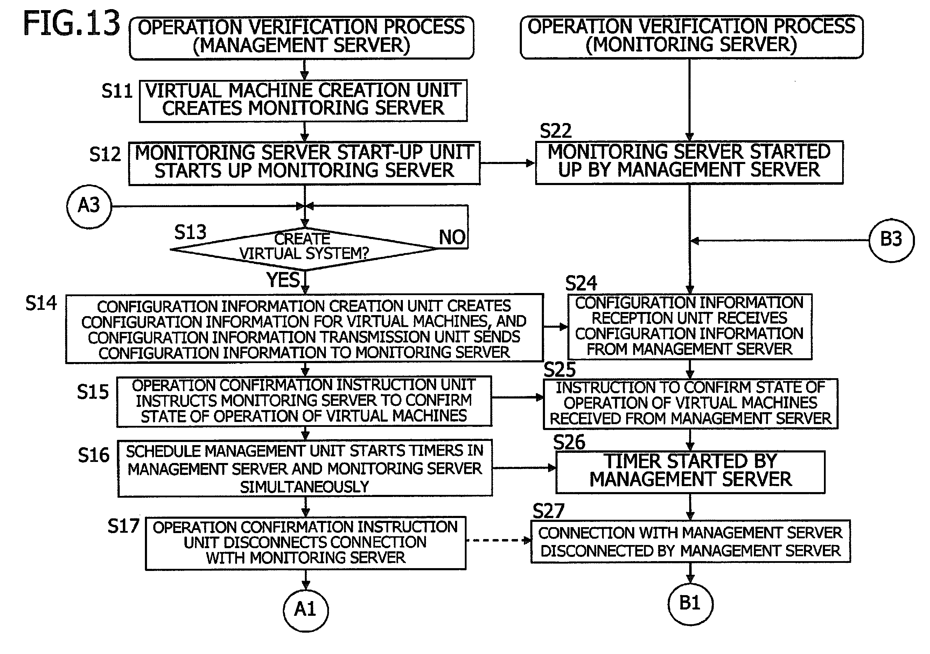

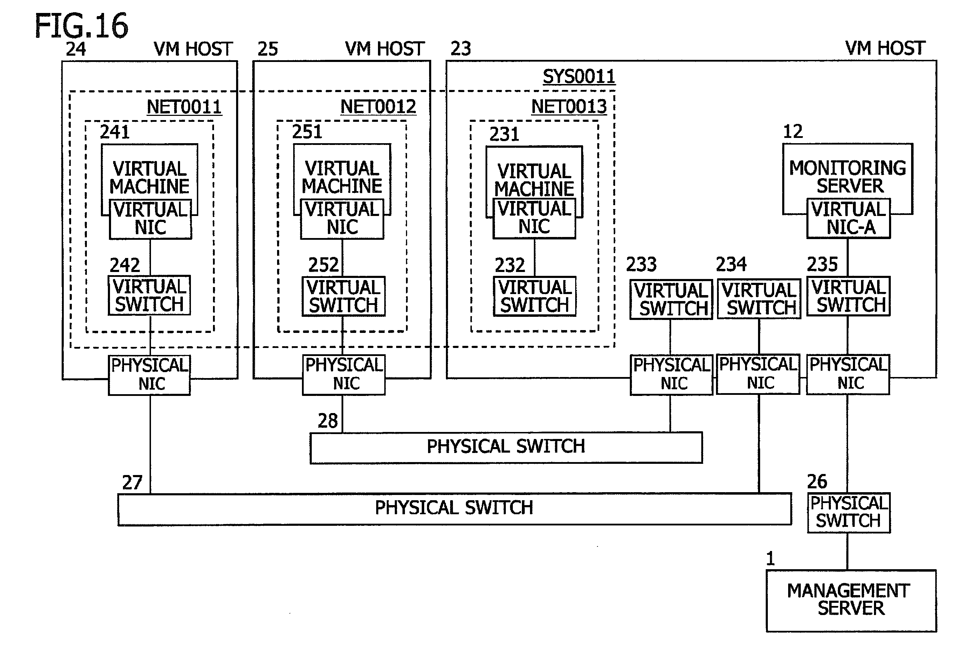

Next, the details of the first embodiment will be described. FIG. 13 to FIG. 15 are flowcharts illustrating the details of the operation verification process for a virtual machine. Furthermore, FIG. 16 to FIG. 18 are diagrams illustrating the switching of connection destination of the monitoring server. The details of the operation verification process in the virtual machines in FIG. 13 to FIG. 15 are described with reference to FIG. 16 to FIG. 18.

### (Processing while management server and monitoring server are connected)

FIG. 13 is a diagram illustrating the processing carried out until the connection between the management server 1 and the monitoring server 12 is disconnected. The virtual machine creation unit 111 of the management server 1 creates a monitoring server 12 before providing a cloud environment for constructing a virtual system, to the cloud user (S11). The monitoring server start-up unit 113 of the management server 1 then starts up the monitoring server 12 (S12, S22). In the example in FIG. 13, it is assumed that the creation of the virtual machines needed for providing the cloud environment, and other settings, etc., have been completed in advance.

Next, upon detecting that a virtual system has been constructed by the cloud user (YES in S13), the configuration information creation unit 114 of the management server 1 creates the configuration information described in FIG. 11 (S14). The configuration information transmission unit 115 of the management server 1 then transmits the configuration information created by the configuration information creation unit 114, to the monitoring server 12 (S14, S24). The configuration information has been described with reference to FIG. 11, and therefore detailed description is omitted here. The configuration information creation unit 114 may previously create configuration information when the virtual system is created (S11). After the configuration information has been sent from the management server 1 to the monitoring server 12 (S14, S24), then the operation confirmation instruction unit 116 of the management server 1 instructs the monitoring server 12 to confirm the state of operation of the virtual machines 11 (S15, S25).

Next, the schedule management unit 117 of the management server 1 starts a timer provided inside the management server 1, in the example in FIG. 13 (S26). The schedule management unit 117 instructs the schedule management unit 212 of the monitoring server 12 in order to start the timer provided inside the monitoring server 12. Here, the schedule management unit 117 instructs the monitoring server 12 to start the timer of the monitoring server 12 simultaneously with the timer of the management server 1. Consequently, it is possible to execute the processing of the management server 1 and the processing of the monitoring server 12 according to the same time axis. Therefore, as described below, even in the time band where the connection between the management server 1 and the monitoring server 12 is disconnected, it is still possible to execute the processing of the management server 1 and the processing of the monitoring server 12, in a synchronous fashion. The start of the timer and the timer instruction by the schedule management unit 117 may be executed during the processing of any of steps S13 to S15, for example. The operation confirmation instruction unit 116 disconnects the connection between the management server 1 and the monitoring server 12, after completion of the processing from S11 to S16. Below, a concrete example of a case where the connection between the management server 1 and the monitoring server 12 is disconnected will be described.

FIG. 16 is a diagram of a case where the management server 1 and the monitoring server 12 are connected. In other words, FIG. 16 is a diagram of a case from S13 to S16 in FIG. 13. In the example in FIG. 16, the management server 1 is physically connected to the VM host 23 via a physical switch 26. Furthermore, the VM host 23 is physically connected to the VM host 24 via a physical switch 27, and is physically connected to the VM host 25 via a physical switch 28.

In the example in FIG. 16, the VM host 24 has a virtual switch 242 and connects with the physical switch 27 via the virtual switch 242. Furthermore, the VM host 25 has a virtual switch 252 and connects with the physical switch 28 via the virtual switch 252. Moreover, the VM host 23 has a monitoring server 12 and a virtual machine 231, and the monitoring server 12 connects to the physical switch 26 via the virtual switch 235 (also called the "first virtual switch device"). Furthermore, the VM host 23 has a virtual switch 232 which connects to the virtual machine 231, a virtual switch 233 (also called "second virtual switch device") which connects to the physical switch 38, and a virtual switch 234 which connects to the physical switch 27. Moreover, one system (SYSTEM0011) is constituted by the configuration described above, as illustrated in FIG. 16. Furthermore, in SYSTEM0011, there are three virtual networks (NET0011 which includes the virtual machine 241, NET0012 which includes the virtual machine 251, and NET0013 which includes the virtual machine 231), as illustrated in FIG. 16. More specifically, in the example illustrated in FIG. 8 also, one system (SYSTEM0001) includes a virtual network (NET0001) including three virtual machines, and a virtual network (NET0003) including one virtual machine and the monitoring server 12, and it can be seen that the VM host (physical machine) 2 which provides the virtual machines and monitoring server 12 is configured so as to be connected with the management server 1 via a physical switch.

As illustrated in FIG. 16, the management server 1 and the monitoring server 12 are connected via the virtual switch 235 and the physical switch 26. The monitoring server 12 is not connected to the virtual machine 241, the virtual machine 251 and the virtual machine 231. In other words, communication is not possible between the management server 1 and the virtual machines. Consequently, when configuration information is transmitted from the management server 1 to the monitoring server 12 (S13 to S16), and so on, communications are never performed between the management server 1 and the virtual machines. In cases where there is a virtual network including the monitoring server 12 and the virtual switch 235, inside the VM host 23, then communications between the management server 1 and the monitoring server 12 may be permitted, by connecting the management server 1 to this virtual network via the physical switch 26.

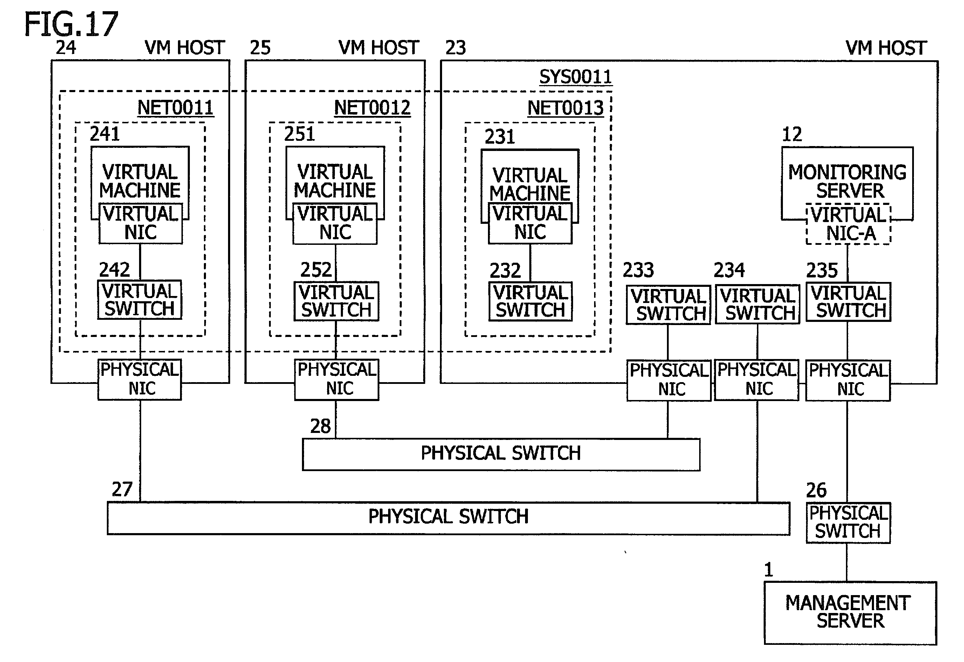

FIG. 17 is a diagram of a case where the connection between the management server 1 and the monitoring server 12 has been disconnected. In other words, FIG. 17 illustrates step S17 in the diagram in FIG. 13. When disconnecting the connection between the management server 1 and the monitoring server 12, the management server 1 deletes the virtual NIC-A of the monitoring server 12 illustrated in FIG. 16 and changes the information relating to the connection destination of the virtual switch 235. By this means, in the state in FIG. 17, the monitoring server 12 is not connected to the management server 1 or to any of the virtual machines. Therefore, in the state in FIG. 17, the management server 1 is not able to communicate with the monitoring server 12. When disconnecting the connection between the management server 1 and the monitoring server 12, in cases where processing by the monitoring server 12 (for example, changing the OS settings) is needed, then the monitoring server 12 may carry out this processing synchronously with the processing by the management server 1.

### (Processing while connection between management server and monitoring server disconnected)

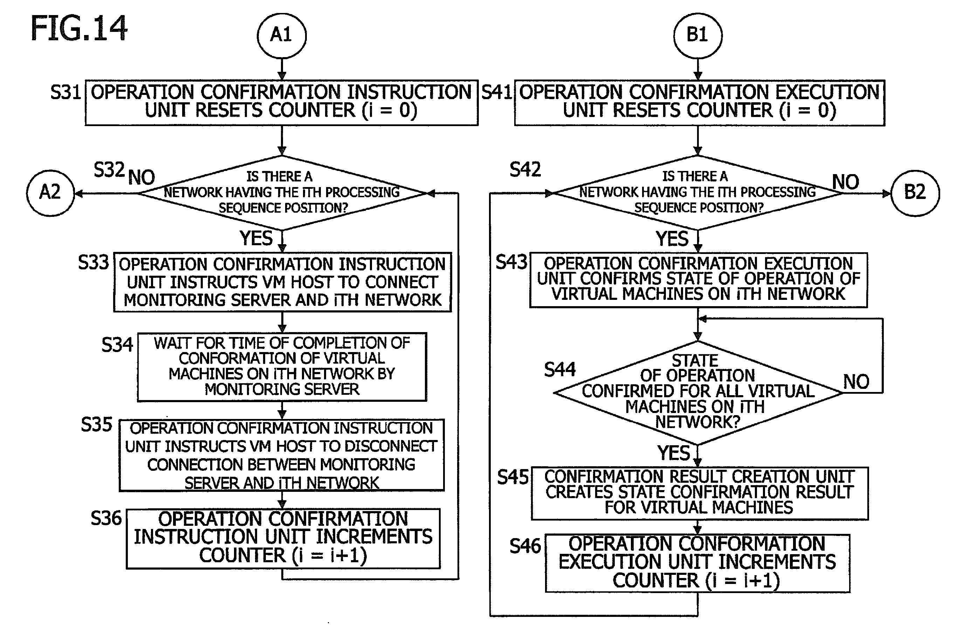

FIG. 14 is a diagram illustrating the processing carried out while the connection between the management server 1 and the monitoring server 12 is disconnected. Firstly, the processing in the management server 1 will be described.

The operation confirmation instruction unit 116 of the management server resets a counter provided in the management server 1 (set to i = 0) (S31). Next, the operation confirmation instruction unit 116 confirms whether or not there is a network having the ith processing sequence position, in accordance with the processing sequence entry in the processing sequence table (S32). When there is a network having the ith processing sequence position (YES in S32), then the operation confirmation instruction unit 116 instructs each VM host to connect the monitoring server 12 to the ith network (S33). The details of connecting the monitoring server 12 to the ith network are described below.

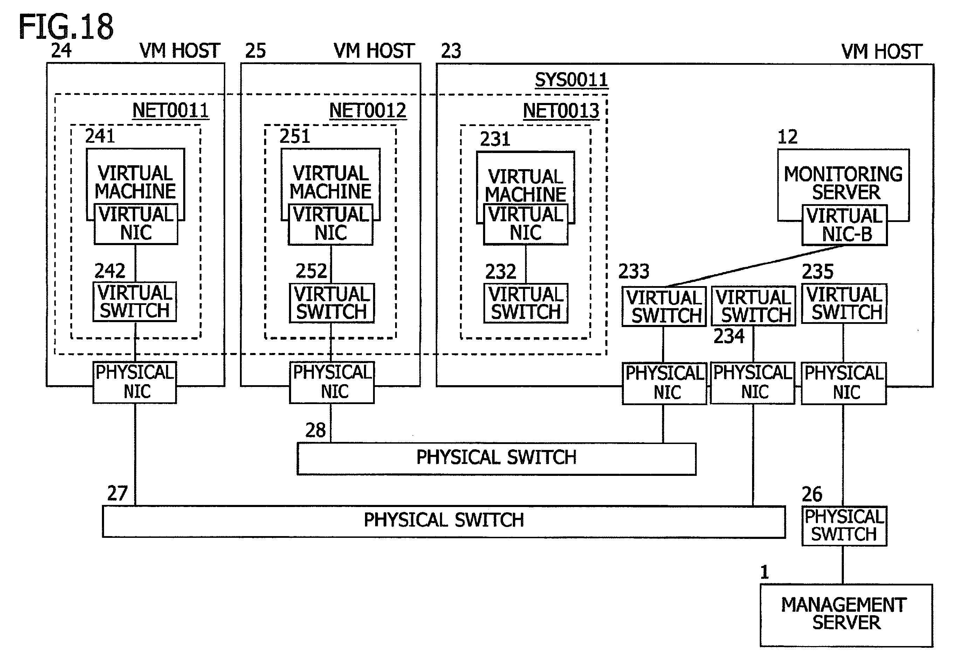

FIG. 18 is a diagram of a case where the monitoring server 12 and the virtual machine 251 are connected. In FIG. 18, the network having the ith processing sequence position is the network (NET0012) which includes the virtual machine 251. In FIG. 18, The VM host which is able to switch between the monitoring server 12 and the networks is the VM host 23 which has the virtual switches 232, 233, 234, 235. Consequently, the management server 1 issues an instruction to the VM host 23 in order to connect the monitoring server 12 to the network having the ith processing sequence position (S33). More specifically, as illustrated in FIG. 18, the management server 1 issues an instruction to connect the monitoring server 12 and the virtual switch 233. The monitoring server 12 makes a connection with the virtual switch 233, by creating a virtual NIC-B in accordance with the instruction from the management server 1, and changing the settings inside the virtual switch 233. In FIG. 17, the connection between the management server 1 and the monitoring server 12 is disconnected, but the connection between the management server 1 and the VM host 23 is not disconnected. Therefore, the operation confirmation instruction unit 116 is able to instruct the VM host 23 so as to connect the monitoring server 12 and the ith network. Upon receiving the instruction from the operation confirmation instruction unit 116, the VM host 23 instructs the virtualization software (not illustrated) in the VM host 23 to connect the monitoring server 12 and the ith network. The virtualization software (not illustrated) which has received the instruction from the VM host 23 makes a connection between the monitoring server 12 and the ith network, as described above.

Returning to FIG. 14, the management server 1 waits at standby until the time at which confirmation of the state of operation has been completed for the virtual machines on the ith network by the monitoring server 12 (S34). More specifically, the schedule management unit 117 of the management server 1 previously determines the time needed for the monitoring server 12 to complete the confirmation of the state of operation of the virtual machines on the ith network (also called the "management server standby time"). By causing the management server 1 to wait to carry out processing until the management server standby time has passed, it is possible to achieve synchronicity between the subsequent processing of the management server 1 and the monitoring server 12. In the example in FIG. 18, the management server 1 waits until confirmation of the state of operation of the virtual machine 251 has been completed by the monitoring server 12.

Next, the operation confirmation instruction unit 116 instructs the VM host 23 to disconnect the connection between the monitoring server 12 and the ith network (S35). In the example in FIG. 18, in order to disconnect the connection between the monitoring server 12 and the virtual switch 233, the virtual NIC-B of the monitoring server 12 is deleted and the information relating to the connection destination of the virtual switch 233 is changed.

Here, the schedule management unit 117 sets the time at which the connection between the management server 1 and the monitoring server 12 is restarted by the confirmation result collection unit 118, to a time later than the time of completion of a communication in which the monitoring server 12 confirms the state of operation of the virtual machine. Accordingly, it is possible to prevent the occurrence of a state where the confirmation result is not able to be received, despite the fact that the connection between the management server 1 and the monitoring server 12 has been restarted. Moreover, the schedule management unit 117 sets the time at which the connection between the monitoring server 12 and the virtual machines is disconnected by the operation confirmation instruction unit 116 (also called "third time") to be a time before the time at which the connection between the management server 1 and the monitoring server 12 is restarted. Furthermore, the schedule management unit 117 sets the third time to be after the time of completion of the communication in which the monitoring server 12 confirms the state of operation of the virtual machines. Consequently, it is possible to prevent connection between the management server 1 and the monitoring server 12, when the monitoring server 12 and the virtual machines are connected. Furthermore, it is also possible to prevent disconnection of the connection between the monitoring server 12 and the virtual machines, before confirmation of the state of operation of the virtual machines has been completed by the monitoring server 12.

The operation confirmation instruction unit 116 increments the counter inside the management server 1 (i = i+1) (S36). The management server 1 repeats the processing from S32 to S36 once, for each of the networks that the monitoring server 12 is scheduled to verify (NO in S32). In the example in FIG. 18, the monitoring server 12 repeats the processing from S32 to S36 three times, in order to confirm the state of operation on the three networks (NET0011, NET0012, NET0013).

Next, the processing of the monitoring server 12 in FIG. 14 will be described. The operation confirmation execution unit 213 of the monitoring server 12 resets the counter provided in the monitoring server 12 (sets i = 0), similarly to S31 performed by the management server 1 (S41). Subsequently, similarly to step S32 of the management server 1, the operation confirmation execution unit 213 confirms whether or not there is a network having the ith processing sequence position (S42). When there is a network having the ith processing sequence position (YES in S42), then the operation confirmation execution unit 213 confirms the state of operation of the virtual machines on the ith network (S43). The operation confirmation execution unit 213 is needed to carry out S43 after connecting the monitoring server 12 and the ith network in S33. Therefore, the schedule management unit 117 manages the operation confirmation execution unit 213 so as to execute S43, after a sufficient time has passed for the management server 1 to issue an instruction to connect the monitoring server 12 and the ith network. When confirmation of operation has been completed for all of the virtual machines on the ith network by the operation confirmation execution unit 213 (YES at S44), then the confirmation result creation unit 214 creates confirmation results for the state of operation of the virtual machines (S45). More specifically, as illustrated in FIG. 12B, the confirmation results are created by inputting the confirmation results from the confirmation of operation of the virtual machines, in the confirmation results column of the configuration information which has been received previously from the management server 1. Once the configuration information has been created by the confirmation result creation unit 214, the operation confirmation execution unit 213 increments the counter in the monitoring server 12 (i = i+1) (S46). Similarly to the processing from S32 to S36 performed by the management server 1, the monitoring server 12 repeats the processing from S42 to S46 once, for each of the networks scheduled for verification by the monitoring server 12 (NO in S42).

### (Processing after management server and monitoring server have been reconnected)

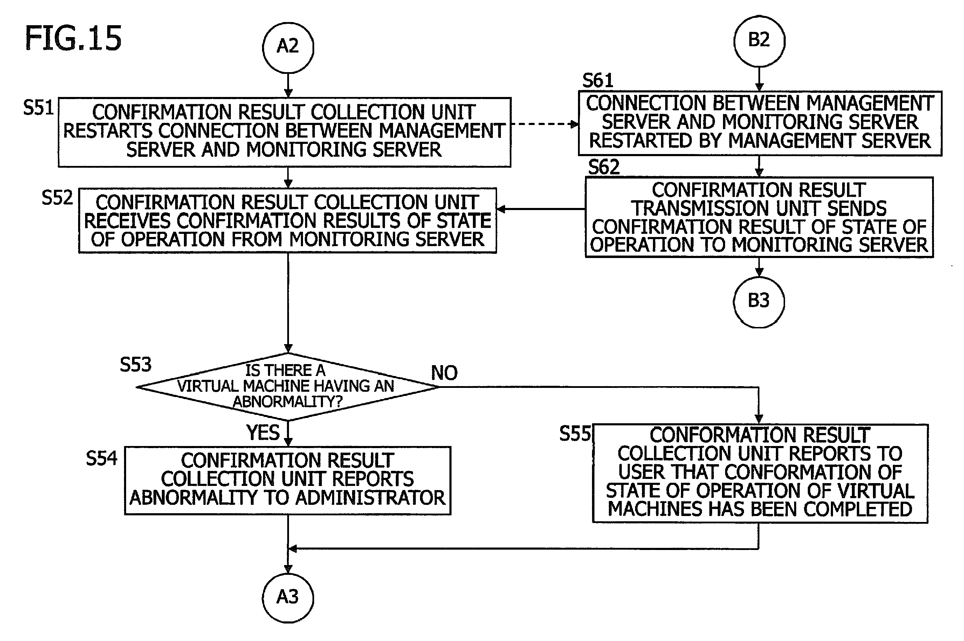

FIG. 15 is a diagram illustrating the processing after the management server 1 and the monitoring server 12 have been reconnected. Confirmation result collection unit 118 of the management server 1 restarts the connection between the management server 1 and the monitoring server 12 (S51, S61), after the monitoring server 12 has performed verification for all of the networks scheduled for verification. After the connection between the management server 1 and the monitoring server 12 has been completed, the confirmation result transmission unit 215 of the monitoring server 12 sends confirmation results for the state of operation of the virtual machines for which the monitoring server 12 has performed verification (S62). The confirmation result collection unit 118 of the management server 1 receives the confirmation results sent by the monitoring server 12 (S52).

Next, the confirmation result collection unit 118 confirms the contents of the received confirmation results, and when there is a virtual machine having an abnormality among the virtual machines that have been verified by the monitoring server 12 (YES in S53), the confirmation result collection unit 118 reports the abnormality to the administrator of the virtual system, for example (S54). On the other hand, when there is no virtual machine having an abnormality (NO in S53), then the confirmation result collection unit 118, for example, reports to the cloud user that confirmation of the state of operation of the virtual machines has been completed without problem (S55). After completion of step S54 or S55, the management server 1 then waits until the next virtual system is created, for example (S13). Furthermore, after completion of S62, the monitoring server 12, in a similar fashion, waits until configuration information relating to the next virtual system is received (S24), for example.

### (Second embodiment)

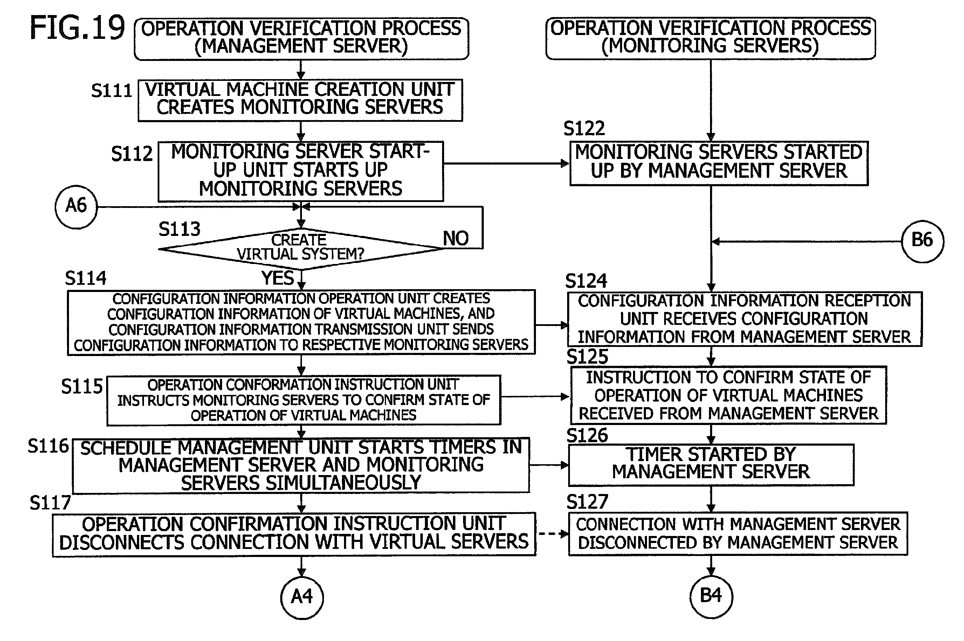

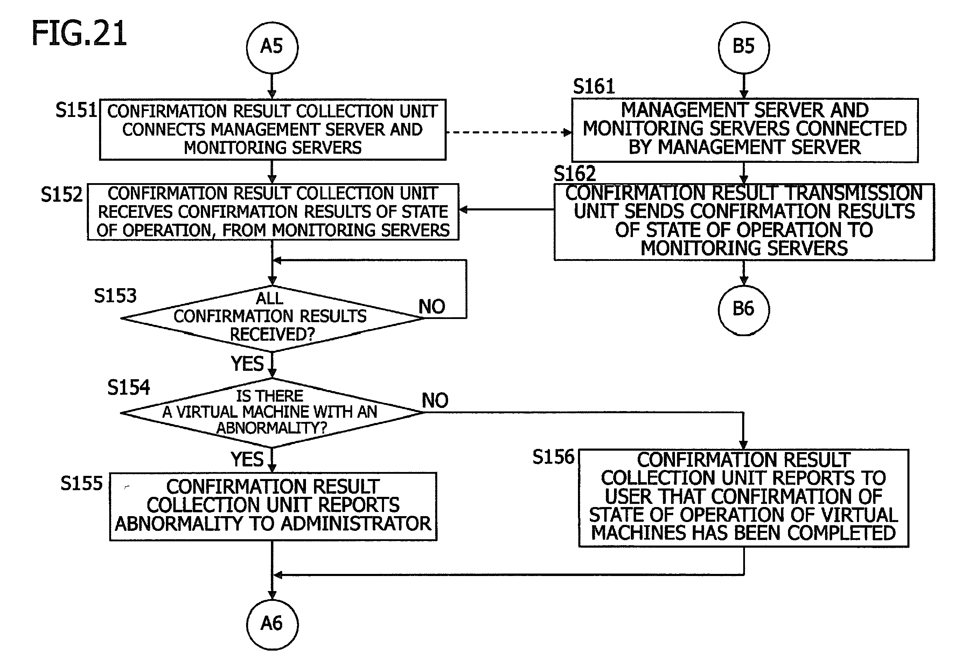

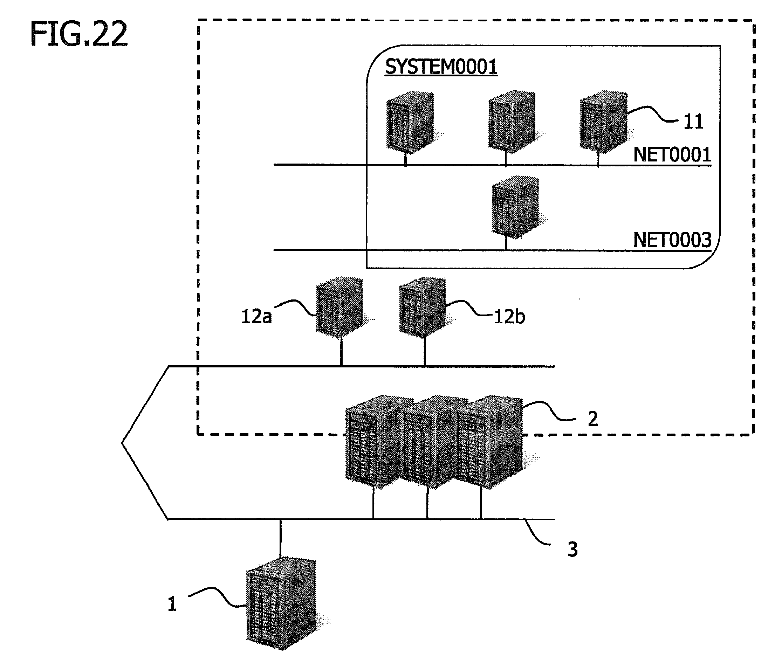

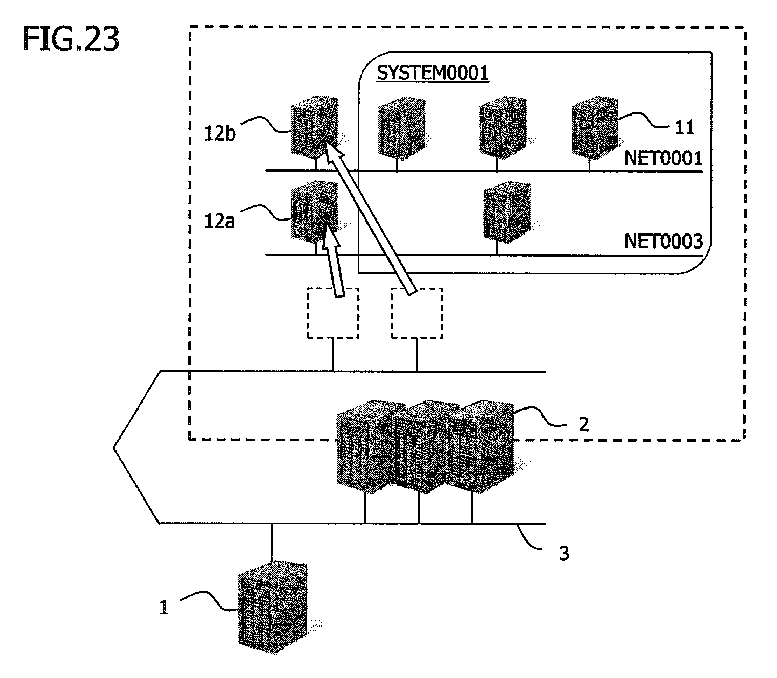

Next, the second embodiment is described. FIG. 19 to FIG. 21 are flowcharts illustrating an operation verification process for a virtual machine according to a second embodiment. Furthermore, FIG. 22 and FIG. 23 are diagrams illustrating an operation verification process for virtual machines according to the second embodiment. The operation verification process for a virtual machine according to the second embodiment in FIG. 19 and FIG. 21 is described with reference to FIG. 22 and FIG. 23. In the first embodiment, only one monitoring server is provided, and the management server 1 confirms the state of operation of virtual machines on respective networks, by connecting this monitoring server sequentially to each network. On the other hand, in the second embodiment, the management server 1 creates one monitoring server for each of the networks where a virtual machine that is the object of verification is located.

### (Processing while management server and monitoring server are connected)

FIG. 19 is a diagram illustrating the processing until the connection between the management server 1 and the monitoring server 12 is disconnected. The virtual machine creation unit 111 of the management server 1 creates the respective monitoring servers 12 before providing a cloud environment for constructing a virtual system, to a cloud user (S111). The monitoring server start-up unit 113 of the management server 1 then starts up each of the monitoring servers 12 (S112, S122).

Next, when the management server 1 detects that a virtual system has been constructed by the cloud user (YES in S113), then the configuration information creation unit 114 of the management server 1 creates configuration information about the virtual machines (S114). The configuration information transmission unit 115 of the management server 1 sends the configuration information created by the configuration information creation unit 114 to each of the monitoring servers 12 (S114, S124). The operation confirmation instruction unit 116 of the management server 1 instructs the monitoring servers 12 to confirm the state of operation of the virtual machines 11 (S115, S125). In the second embodiment, there is a plurality of monitoring servers 12. Consequently, the configuration information creation unit 114 is needed to create a plurality of configuration information including information about the virtual machines of which the state of operation has been confirmed by the respective monitoring servers 12, for each of the monitoring servers 12.

Thereupon, the schedule management unit 117 of the management server 1 starts the timer provided in the management server 1 (S116). Moreover, the schedule management unit 117 issues an instruction to the schedule management units 212 in the monitoring servers 12, such that a timer provided in the monitoring servers 12 (S126) by the monitoring servers 12. The operation confirmation instruction unit 116 disconnects the connection between the management server 1 and the monitoring servers 12, after completion of the processing from S11 to S16 (S117, S127). The processing while the management server and the monitoring server are connected in FIG. 19 is different to the processing in FIG. 13, in that the management server 1 carries out processing in a plurality of monitoring servers 12, but the contents of these processes are each the same as the processing in FIG. 13. Therefore, a detailed description of each process is omitted here.

### (Processing while connection between management server and monitoring server is disconnected)

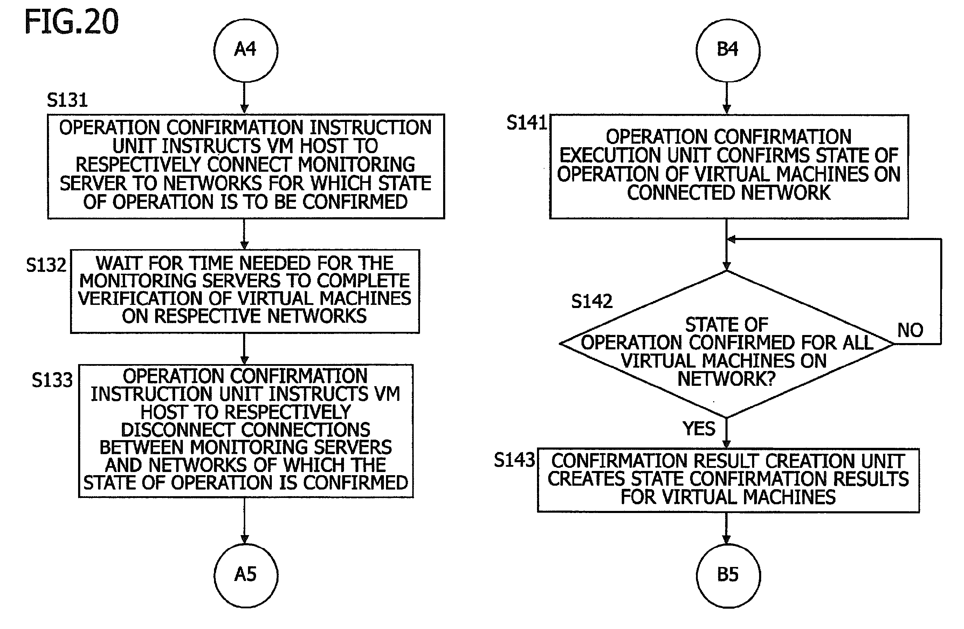

FIG. 20 is a diagram illustrating the processing while the connection between the management server 1 and the monitoring servers 12 is disconnected. Firstly, the processing of the management server 1 will be described.

The operation confirmation instruction unit 116 of the management server 1 instructs the VM host to connect the monitoring servers 12 and the networks of which the state of operation is to be confirmed by the monitoring servers 12 (S131). The connection of the monitoring servers 12 and the networks of which the state of operation is to be confirmed by the monitoring servers 12 is made by creating a new virtual NIC for the monitoring servers 12, as described more specifically in FIG. 18, and using this virtual NIC to connect to a virtual switch connected to the network of which the state of operation is to be confirmed. Next, the management server 1 waits until reaching the time where the monitoring servers 12 have each completed confirmation of the state of operation in the virtual machines on the respective networks (S132). The operation confirmation instruction unit 116 instructs the VM host to respectively disconnect the connections between each of the monitoring servers 12 and the network of which the state of operation is to be confirmed (S133).

Next, the processing of the monitoring servers 12 in FIG. 20 will be described. The operation confirmation execution unit 213 of the monitoring servers 12 confirms the state of operation of the virtual machines on the network to which it is connected (S141). After the monitoring servers 12 and the networks of which the state of operation is to be confirmed by the monitoring servers 12 are connected in step S131, the operation confirmation execution unit 213 needs to execute S43. Consequently, the schedule management unit 117 manages the operation confirmation execution unit 213 so as to execute S141, after a sufficient time has elapsed to instruct the management server 1 to connect the monitoring servers 12 and the networks. When confirmation of operation has been completed for all of the virtual machines on the networks by the operation confirmation execution unit 213 (YES in S142), then the confirmation result creation unit 214 creates confirmation results for the state of operation of the virtual machines (S143). There follows a concrete example of disconnection of the connection between the management server 1 and the monitoring server 12, and of connection between the monitoring server 12 and the virtual machines.

In the example illustrated in FIG. 22, similarly to the case in FIG. 7, the management server 1 is connected to a management LAN 3. The management LAN 3 is not connected to the networks to which the respective virtual machines 11 are connected. Furthermore, in the example illustrated in FIG. 22, the management server 1 creates a monitoring server 12a and a monitoring server 12b, and the monitoring server 12a and the monitoring server 12b are connected to the management LAN 3. In other words, the management server 1 creates a monitoring server for each of the networks where a virtual machine 11 that is the object of verification is located. Therefore, similarly to the case in FIG. 7, communication with the monitoring servers 12 is possible, but communication with the virtual machines 11 is not possible. Furthermore, FIG. 23 illustrates a case where the monitoring server 12a and the monitoring server 12b are respectively connected to networks for which the state of operation is to be confirmed. In the example in FIG. 23, the monitoring server 12a and the monitoring server 12b confirm the state of operation of the virtual machines 11 by being connected respectively to NET0003 and NET0001.

### (Processing after management server and monitoring servers are reconnected)

FIG. 21 is a diagram illustrating the processing after the management server 1 and the monitoring servers 12 have been reconnected. After the networks scheduled for verification by the monitoring servers 12 have been verified, the confirmation result collection unit 118 of the management server 1 restarts the connection between the management server 1 and the monitoring servers 12 (S151, S161). When the connection between the management server 1 and the monitoring servers 12 has been completed, the confirmation result transmission unit 215 of each monitoring server 12 sends a confirmation result for the state of operation of the virtual machines that have been verified by the monitoring server 12 (S162). The confirmation result collection unit 118 of the management server 1 receives the confirmation results sent from the monitoring servers 12 (S152).

Next, after receiving confirmation results from all of the monitoring servers 12 (YES in S153), the confirmation result collection unit 118 checks the contents of the received confirmation results. When there is a virtual machine having an abnormality among the virtual machines that have been verified by the monitoring servers 12 (YES in S154), then the confirmation result collection unit 118 reports the abnormality to the administrator of the virtual system (S155). On the other hand, when there is no virtual machine having an abnormality (NO in S154), then the confirmation result collection unit 118 reports to the cloud user that confirmation of the state of operation of the virtual machines has been completed without problem (S156). After completion of S155 or S156, the management server 1 waits until the next virtual system is created, for example (S113). Furthermore, after completion of S162, each of the monitoring servers 12, in a similar fashion, waits until configuration information relating to the next virtual system is received (S124).

According to the second embodiment, the management server 1 constructs one management server 12 for each of the networks where a virtual machine that is the object of verification is located. In this way, the management server 1 is not needed to switch the monitoring server 12 in sequential fashion. Furthermore, the state of operation of the virtual machines on each of the networks can be confirmed in parallel. Therefore, it is possible to shorten the time needed to confirm the state of operation of the virtual machines by the management server 1.

## Claims

1. An operation verification device (1) for a virtual apparatus (11) which confirms a state of operation of the virtual apparatus (11),
the operation verification device (1) being **characterized in that**, the operation verification device (1) comprises:
a configuration information (124) transmission unit (115) which transmits configuration information (124) on the virtual apparatus (11) to an operation confirmation device (12) that performs with the virtual apparatus a communication for confirming the state of operation of the virtual apparatus (11);
an operation confirmation instruction unit (116) which instructs the operation confirmation device (12) to perform the communication for confirming the state of operation on a basis of the configuration information (124) while a connection with the operation confirmation device (12) is disconnected, and after instructing, disconnects the connection with the operation confirmation device (12); and
a confirmation result collection unit (118) which restarts the connection with the operation confirmation device (12) and receives a result of the confirmation of the state of operation from the operation confirmation device, while a connection between the operation confirmation device (12) and the virtual apparatus (11) is disconnected.

2. The operation verification device (1) for a virtual apparatus (11) according to claim 1, wherein the connection between the operation confirmation device (12) and the virtual apparatus (11) is made by connecting the operation confirmation device (12) with a virtual network on which the virtual apparatus (11) is located.

3. The operation verification device (1) for a virtual apparatus (11) according to claim 2, wherein the operation confirmation instruction unit (116) issues an instruction to connect a plurality of the operation confirmation devices (12) respectively to a plurality of virtual networks that are not able to communicate with each other, and to perform a communication for confirming the state of operation, with the virtual apparatuses (11) on the virtual networks to which the operation confirmation devices (12) are connected.

4. The operation verification device (1) for a virtual apparatus (11) according to claim 2, wherein the operation confirmation instruction unit (116) issues an instruction to connect the operation confirmation device (12) sequentially to a plurality of virtual networks that are not able to communicate with each other, and to perform a communication for confirming the state of operation, with the virtual apparatuses (11) on the virtual networks to which the operation confirmation device (12) is connected.

5. The operation verification device (1) for a virtual apparatus (11) according to any one of claims 2 to 4, wherein the virtual network allocates an operation confirmation device (12) IP address for connection with the operation confirmation device (12).

6. The operation verification device (1) for a virtual apparatus (11) according to claim 1, further comprising:
a schedule management unit (117) which manages a first time at which a communication for confirming, by the operation confirmation device (12), the state of operation is completed, and a second time at which connection with the operation confirmation device (12) is restarted,
wherein the operation confirmation instruction unit (116) issues an instruction to perform a communication for confirming the state of operation, on a basis of the first time,
the confirmation result collection unit (118) restarts the connection with the operation confirmation device (12), on a basis of the second time, and
the schedule management unit (117) sets the second time so as to come after the first time.

7. The operation verification device (1) for a virtual apparatus (11) according to claim 6,
wherein the schedule management unit (117) manages a third time at which a connection between the operation confirmation device (12) and the virtual apparatus (11) is disconnected,
the operation confirmation instruction unit (116) issues an instruction to disconnect the connection between the operation confirmation device (12) and the virtual apparatus (11), on a basis of the third time, and
the schedule management unit (117) sets the third time so as to come after the first time and before the second time.

8. The operation verification device (1) for a virtual apparatus (11) according to claim 1,
wherein a communication with the operation confirmation device (12) is performed via a first virtual switch device, and
disconnection of the connection with the operation confirmation device (12) is performed by disconnecting the connection between the operation confirmation device (12) and the first virtual switch device.

9. The operation verification device (1) for a virtual apparatus (11) according to claim 8,
wherein the operation confirmation instruction unit (116) issues an instruction to make a connection between the operation confirmation device (12) and the virtual apparatus (11), by connecting the operation verification device (1) with a second virtual switch device which is connected to the virtual apparatus (11).

10. An operation verification system for a virtual apparatus (11),
the operation verification system being **characterized in that**, the operation verification system comprises:
an operation verification device (1) for a virtual apparatus (11) which confirms a state of operation of the virtual apparatus (11); and
an operation confirmation device (12) which performs with the virtual apparatus a communication for confirming the state of operation of the virtual apparatus (11),
wherein the operation verification device (1) has:
a configuration information (124) transmission unit (115) which transmits configuration information (124) on the virtual apparatus (11) to the operation confirmation device (12); and
an operation confirmation instruction unit (116) which instructs the operation confirmation device (12) to confirm the state of operation, and after instructing, disconnects the connection with the operation confirmation device (12),
the operation confirmation device (12) has an operation confirmation execution unit which connects with the virtual apparatus (11) and performs with the virtual apparatus a communication for confirming the state of operation on a basis of the configuration information (124) while a connection between the operation verification device (1) and the operation confirmation device (12) is disconnected, and after confirming the state of operation, disconnects the connection with the virtual apparatus (11), and
the operation verification device (1) further has a confirmation result collection unit (118) which restarts the connection with the operation confirmation device (12) and receives a result of the confirmation of the state of operation from the operation confirmation device, while the connection between the operation confirmation device (12) and the virtual apparatus (11) is disconnected.

11. A program for causing a computer to execute an operation verification process for a virtual apparatus (11) to confirm a state of operation of the virtual apparatus (11),
the process being **characterized in that**, the process comprises:
transmitting configuration information (124) on the virtual apparatus (11) to an operation confirmation device (12) that performs with the virtual apparatus a communication for confirming the state of operation of the virtual apparatus (11);
instructing the operation confirmation device (12) to perform a communication for confirming the state of operation on a basis of the configuration information (124) while a connection with the operation confirmation device (12) is disconnected, and after instructing, disconnecting the connection with the operation confirmation device (12); and
restarting the connection with the operation confirmation device (12)and receiving a result of the confirmation of the state of operation from the operation confirmation device, while the connection between the operation confirmation device (12) and the virtual apparatus (11) is disconnected.
